# EUROPEAN PATENT APPLICATION

(11) **EP 3 062 052 A1**
(43) Date of publication of application: **31.08.2016**
(21) Application number: 14856192.1
(22) Date of filing: 16.10.2014
(51) Int. Cl.: F28D 20/00, F01N 3/20

(54) **CHEMICAL HEAT STORAGE DEVICE**

(30) Priority: 24.10.2013 JP 2013221342; 24.10.2013 JP 2013221269
(71) Applicant: Kabushiki Kaisha Toyota Jidoshokki, Kariya-shi, Aichi 448-8671 (JP)
(72) Inventor: HARIU, Satoshi, Kariya-shi Aichi 448-8671 (JP); YAMASAKI, Takafumi, Kariya-shi Aichi 448-8671 (JP); NOGUCHI, Yukihiro, Kariya-shi Aichi 448-8671 (JP); KAWAUCHI, Hiroyasu, Kariya-shi Aichi 448-8671 (JP); SUZUKI, Hideaki, Kariya-shi Aichi 448-8671 (JP)
(74) Representative: TBK
(86) International application number: PCT/JP2014/077600
(87) International publication number: WO 2015/060199

(57) **Abstract**

A chemical heat storage device according to one embodiment is a chemical heat storage device to heat a heating target disposed inside an exhaust pipe connected to an engine, the chemical heat storage device comprising a reactor disposed around the exhaust pipe and including a heat storage material which chemically reacts with a reaction medium to generate heat and a high heat conducting member having a thermal conductivity higher than that of the heat storage material, a storage which stores the reaction medium, and a connection pipe which connects the reactor to the storage to transfer the reaction medium between the reactor and the storage, wherein the high heat conducting member extends from a side of an outer peripheral surface of the reactor to a side of an inner circumferential surface of the reactor in contact with the exhaust pipe.

## Description

### Technical Field

The present invention relates to a chemical heat storage device disposed in an exhaust system of an engine and used in heating of a target object of heating.

### Background Art

As a conventional chemical heat storage device, the chemical heat storage device described in Patent Literature 1 is known, for example. In the chemical heat storage device described in Patent Literature 1, a reactor in which a heat storage material is accommodated is disposed in the outer peripheral portion of a catalyst (target object of heating) to heat the catalyst using the reaction heat through a chemical reaction of the heat storage material. At a temperature of the catalyst of less than the active temperature, for example, at the start of the engine, such a chemical heat storage device chemically reacts the heat storage material with a reaction medium to heat the catalyst with the reaction heat (exothermic reaction). At a temperature of the exhaust gas of more than a predetermined temperature, for example, during travel, in the chemical heat storage device, the heat of the exhaust gas is conducted to the heat storage material to separate the reaction medium from the heat storage material by the heat (regeneration reaction).

### Summary of Invention

### Technical Problem

The thermal conductivity of the heat storage material in the reactor is low in the conventional chemical heat storage device. For this reason, the reaction heat generated in the heat storage material is barely conducted to the catalyst during the exothermic reaction, and it takes some time to heat the catalyst to the active temperature. During the regeneration reaction, the heat from the exhaust gas is barely conducted to the heat storage material, so that it takes some time to separate the reaction medium from the heat storage material.

An object of the present invention, then, is to provide a chemical heat storage device which can improve the thermal conductivity in the reactor.

### Solution to Problem

The chemical heat storage device according to an aspect of the present invention is a chemical heat storage device to heat a heating target disposed inside an exhaust pipe connected to an engine, the chemical heat storage device including a reactor disposed around the exhaust pipe and including a heat storage material which chemically reacts with a reaction medium to generate heat and a high heat conducting member having a thermal conductivity higher than that of the heat storage material, a storage which stores the reaction medium, and a connection pipe which connects the reactor to the storage to transfer the reaction medium between the reactor and the storage, wherein the high heat conducting member extends from a side of an outer peripheral surface of the reactor to a side of an inner circumferential surface of the reactor in contact with the exhaust pipe.

In such a chemical heat storage device, if the temperature of the exhausted gas from the engine is low, the reaction medium is fed from the storage to the reactor to generate heat (reaction heat) from the heat storage material through the chemical reaction between the heat storage material and the reaction medium (exothermic reaction), and the reaction heat is conducted to the heating target to heat the heating target. In contrast, if the temperature of the exhausted gas from the engine increases, the heat of the exhausted gas is conducted to the heat storage material to separate the heat storage material and the reaction medium (regeneration reaction), so that the reaction medium is recovered in the storage. Since the high heat conducting member extends from the side of the outer peripheral surface of the reactor to the side of the inner circumferential surface of the reactor in contact with the exhaust pipe, the heat generated in the heat storage material or the heat of the exhausted gas is conducted through the high heat conducting member along the diameter direction of the exhaust pipe. Thereby, the thermal conductivity inside the reactor is improved. Accordingly, since the reaction heat generated in the heat storage material is readily conducted to the heating target during the exothermic reaction, the heating target can be efficiently heated. Moreover, the heat of the exhausted gas is readily conducted over the heat storage material during the regeneration reaction, so that the reaction medium can be efficiently recovered from the reactor in the storage.

In one embodiment, the heat storage material and the high heat conducting member are disposed so as to contact the exhaust pipe, and the high heat conducting member may be interposed between the heat storage materials.

In such a chemical heat storage device, the high heat conducting member having a thermal conductivity higher than that of the heat storage material is interposed between the heat storage materials, so that the heat generated in the heat storage material or the heat of the exhausted gas is conducted through the high heat conducting member. Thereby, the thermal conductivity inside the reactor is improved.

In one embodiment, each heat storage material is formed into an annular shape, and is arranged along the axial direction of the exhaust pipe, and the high heat conducting member may be formed into an annular shape.

In such a chemical heat storage device, since the heat storage material is formed into an annular shape, heat generated in any place of the heat storage material is conducted through the high heat conducting member in the diameter direction of the exhaust pipe. Thereby, the thermal conductivity inside the reactor can be surely improved.

In one embodiment, each heat storage material is formed to have a curved cross section so as to extend in the axial direction of the exhaust pipe, and is arranged along the circumferential direction of the exhaust pipe, and the high heat conducting member may extend in the axial direction of the exhaust pipe.

In such a chemical heat storage device, the heat generated in the heat storage material or the heat of the exhausted gas is conducted through the high heat conducting member in the axial direction of the exhaust pipe. Thereby, the thermal conductivity inside the reactor can be surely improved.

In one embodiment, an annular space for guiding the reaction medium to which the connection pipe is connected may be disposed in at least one end of ends of the reactor upstream and downstream in the axial direction of the exhaust pipe.

In such a chemical heat storage device, since the reaction medium introduced from the connection pipe is immediately diffused in the circumferential direction across the inside of the reactor, the heat storage material can be efficiently chemically reacted with the reaction medium inside the reactor.

In one embodiment, a passage for distributing the reaction medium may be formed in the high heat conducting member.

In such a chemical heat storage device, since the reaction medium is distributed via the passage through the high heat conducting member, the reaction medium readily permeates into the whole heat storage material. Thereby, the heat storage material can be efficiently chemically reacted with the reaction medium inside the reactor.

In one embodiment, the high heat conducting member may have a sheet-like shape.

In such a chemical heat storage device, even if the heat storage material expands due to permeation of the reaction medium into the heat storage material, the high heat conducting member flexibly follows. Thereby, breakage of the high heat conducting member or the like can be prevented.

In one embodiment, the high heat conducting member may be a sheet-like member, and each of a plurality of folded portions formed by folding the high heat conducting member may be disposed so as to be located on the side of the outer peripheral surface of the reactor to which the connection pipe is connected or on the side of the inner circumferential surface of the reactor in contact with the exhaust pipe, and may form a plurality of heat-conducting surfaces extending from the side of the outer peripheral surface to the side of the inner circumferential surface.

In the chemical heat storage device having such a configuration, the reactor disposed around the exhaust pipe accommodates the heat storage material containing a sheet-like high heat conducting member having a thermal conductivity higher than that of the heat storage material, and the high heat conducting member forms a plurality of heat-conducting surfaces extending from the side of the outer peripheral surface to the side of the inner circumferential surface. For this reason, the heat generated in the heat storage material is conducted through the high heat conducting member to the target object of heating and the heat from the exhaust gas is conducted through the high heat conducting member to the heat storage material, so that the thermal conductivity inside the reactor is improved. As a result, the reaction heat generated in the heat storage material is readily conducted to the target object of heating during the exothermic reaction, so that the target object of heating can be efficiently heated. Moreover, the heat from the exhaust gas is readily conducted to the heat storage material during the regeneration reaction, so that the reaction medium can be efficiently separated from the heat storage material.

In one embodiment, a flat surface approximately parallel to the outer peripheral surface of the exhaust pipe may be formed in the high heat conducting member.

In such a chemical heat storage device, heat can be more efficiently conducted to the portion in which the flat surface is formed, and the heat from the portion in which the flat surface is formed can be more efficiently absorbed.

In one embodiment, the flat surface may be disposed adjacent to the folded portions located on the side of the inner circumferential surface.

In such a chemical heat storage device, the target object of heating disposed on the side of the inner circumferential surface of the reactor can be more efficiently heated, and the heat from the exhaust gas passing through the side of the inner circumferential surface of the reactor can be more efficiently absorbed.

In one embodiment, the folded portions of the high heat conducting member may be exposed from the heat storage material.

In such a chemical heat storage device, heat can be more efficiently conducted to the portion where the heat storage material is exposed, and the heat from the portion where the heat storage material is exposed can be more efficiently absorbed.

Moreover, in one embodiment, among the folded portions of the high heat conducting member, the folded portions located on the side of the inner circumferential surface may be exposed from the heat storage material.

In such a chemical heat storage device, the target object of heating disposed on the side of the inner circumferential surface of the reactor can be more efficiently heated, and the heat from the exhaust gas can be more efficiently absorbed.

In one embodiment, holes for distributing the reaction medium may be formed on the heat-conducting surfaces of the high heat conducting member.

In such a chemical heat storage device, since the reaction medium can be freely distributed in the high heat conducting member through the holes formed on the heat-conducting surfaces, the reaction medium readily permeates into the whole heat storage material. Thereby, the heat storage material can be efficiently chemically reacted with the reaction medium.

In one embodiment, the high heat conducting member may be a graphite sheet.

In such a chemical heat storage device, the sheet-like high heat conducting member can be readily formed.

In one embodiment, carbon fibers may be further contained in the heat storage material.

In such a chemical heat storage device, since carbon fibers having a thermal conductivity higher than that of the heat storage material are further contained in addition to the high heat conducting member, heat can be more efficiently conducted.

### Advantageous Effects of Invention

According to an aspect of the present invention, the thermal conductivity inside the reactor can be improved.

### Brief Description of Drawings

[Figure 1] Figure 1 is a schematic view of a configuration showing an exhaust gas purifying system including a chemical heat storage device according to a first embodiment.
[Figure 2] Figure 2 is a perspective view showing a heat storage material and a high heat conducting sheet disposed around the exhaust pipe shown in Figure 1.
[Figure 3] Figure 3 is a sectional view showing an inside of a reactor in the chemical heat storage device according to a second embodiment.
[Figure 4] Figure 4 is a side-sectional view showing the inside of the reactor in the chemical heat storage device shown in Figure 3 and a connection pipe.
[Figure 5] Figure 5 is a perspective view showing the high heat conducting sheet shown in Figure 3.
[Figure 6] Figure 6 is a perspective view showing a molded body accommodated in an inner space of the reactor in the chemical heat storage device according to a third embodiment.
[Figure 7] Figure 7 is an enlarged perspective view showing a portion of the molded body shown in Figure 6.
[Figure 8] Figure 8 is a perspective view showing a graphite sheet extracted from the molded body shown in Figure 7.
[Figure 9] Figure 9 is a drawing showing a cross section of the molded body according to a modification of the third embodiment seen from the axial direction of the exhaust pipe.
[Figure 10] Figure 10 is a drawing showing a cross section of the molded body according to a modification of the third embodiment seen from the axial direction of the exhaust pipe.
[Figure 11] Figure 11 is a drawing showing a cross section of the inner space of the reactor according to a modification of the third embodiment seen from the axial direction of the exhaust pipe.
[Figure 12] Figure 12 is a schematic view of a configuration showing a modification of an exhaust gas purifying system including one embodiment of the chemical heat storage device.

### Description of Embodiments

Hereinafter, an exhaust gas purifying system 1 including a chemical heat storage device 10 according to one embodiment will be described with reference to the drawings. In the description of the drawings, same reference numerals will be given to same components, and duplication of description will be omitted. Ratios of dimensions in the drawings are not always equal to those in description.

### (First Embodiment)

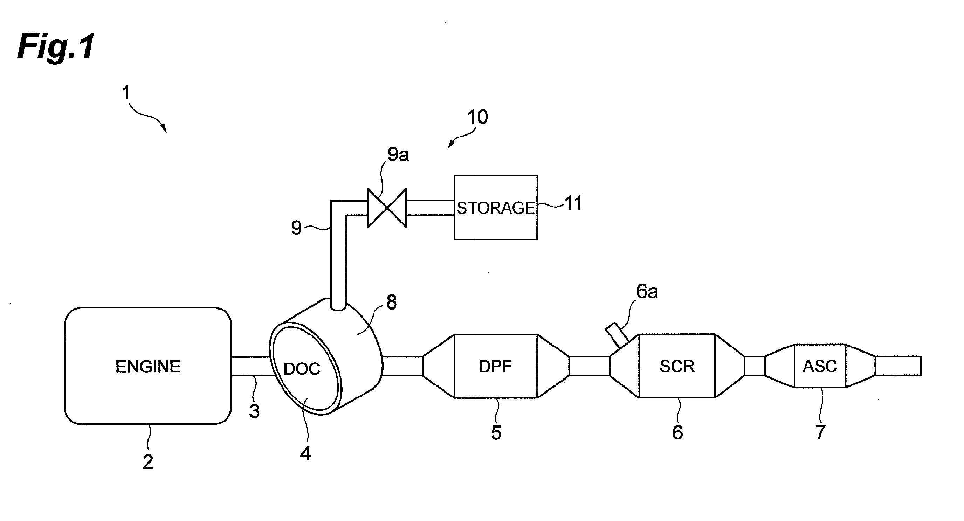

Figure 1 is a schematic view of a configuration showing the exhaust gas purifying system 1 including the chemical heat storage device 10 according to a first embodiment. The exhaust gas purifying system 1 shown in Figure 1 is a system disposed in an exhaust system in a diesel engine 2 (hereinafter, simply referred to as "engine 2") of a vehicle to purify hazardous substances (environmental contaminants) contained in the exhaust gas emitted from the engine 2.

The exhaust gas purifying system 1 includes an oxidation catalyst (DOC: diesel oxidation catalyst) 4, a diesel exhaust nanoparticle removing filter (DPF: diesel particulate filter) 5, a selective reducing catalyst (SCR: selective catalytic reduction) 6, and an oxidation catalyst (ASC: ammonia slip catalyst) 7, which are disposed in sequence halfway from upstream to downstream of an exhaust passage 3 connected to the engine 2.

The DOC 4 is a catalyst which oxidizes HC and/or CO contained in the exhaust gas for purification. The DPF 5 is a filter which traps PM contained in the exhaust gas to remove the PM. The SCR 6 is a catalyst which feeds urea or NH₃ (ammonia) from an addition valve 6a to reduce NOx contained in the exhaust gas for purification. The ASC 7 is a catalyst which oxidizes ammonia flowing downstream of the SCR 6.

In the DOC 4, there is a temperature region in which the ability to purify environmental contaminants is demonstrated (active temperature). Accordingly, the DOC 4 needs to be heated to increase the temperature of the DOC 4 to the active temperature. Accordingly, the exhaust gas purifying system 1 includes the chemical heat storage device 10 which heats the DOC 4. The chemical heat storage device 10 is a heating means which heats the DOC 4 (target object of heating) without requiring external energy such as electricity. The chemical heat storage device 10 stores the heat of the exhaust gas (waste heat), and uses the stored heat if necessary.

The chemical heat storage device 10 has a reactor 8, and a storage 11 connected to the reactor 8 through a connection pipe 9 to store ammonia (NH₃) as a reaction medium. The connection pipe 9 is a unit which connects the reactor 8 to the storage 11 to transfer ammonia between the reactor 8 and the storage 11. In the connection pipe 9, an on-off valve 9a is disposed.

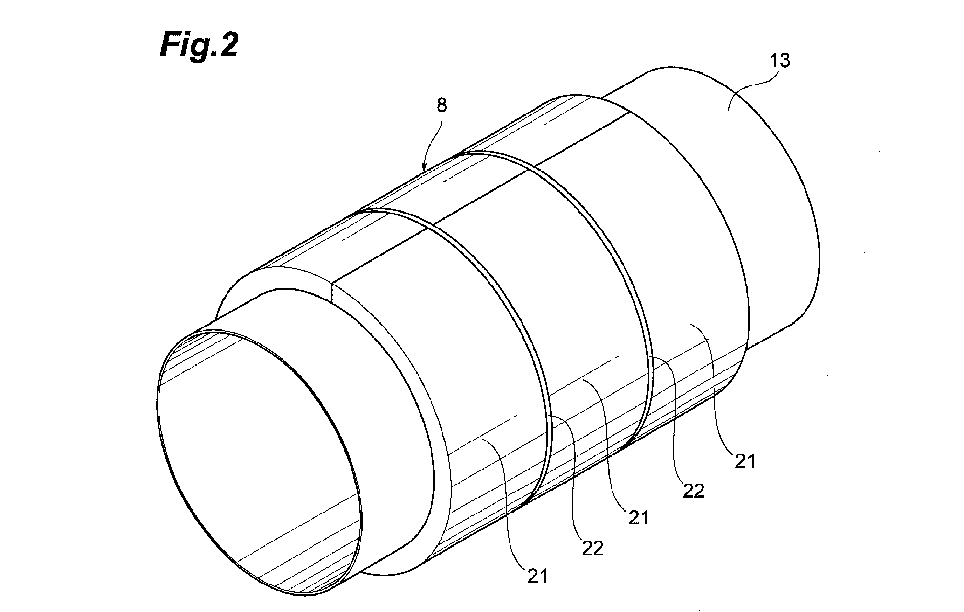

As shown in Figure 2, the reactor 8 is disposed on the outer periphery of an exhaust pipe 13, which is part of the exhaust passage 3. The exhaust pipe 13 is a cylindrical pipe, for example, and is formed of stainless steel, for example. The DOC 4 as the target object of heating is disposed inside the exhaust pipe 13.

The reactor 8 has a heat storage material 21 and a high heat conducting sheet 22 as a high heat conducting member. The heat storage material 21 and the high heat conducting sheet 22 are accommodated in the inner space of an annular case (not shown) in the reactor 8. The heat storage material 21 and the high heat conducting sheet 22 are formed into an annular shape, and are disposed along the axial direction of the exhaust pipe 13 so as to contact the outer peripheral surface of the exhaust pipe 13. The high heat conducting sheet 22 is interposed between the heat storage materials 21.

The heat storage material 21 chemically reacts with ammonia to generate heat. The heat storage material 21 is a molded body formed through compression molding, for example. At this time, the heat storage material 21 is configured to have an annular shape, for example, by combining a plurality of molded body parts formed to have a curved cross section seen from the axial direction of the exhaust pipe 13.

In the heat storage material 21, a material having a composition MₐX_{z} is used. M is one or more cations selected from alkali metals, alkaline earth metals, aluminum, transition metals, and combinations of these metals. X is one or more anions selected from fluoride ions, chloride ions, bromide ions, iodide ions, nitric acid ions, thiocyanic acid ions, sulfuric acid ions, molybdic acid ions, and phosphoric acid ions. a is the number of cations per metal salt molecule. x is the number of anions per metal salt molecule. The heat storage material 21 can be formed of MgCl₂, for example. The heat storage material 21 may be formed of CaCl₂, MCl₂, MgI₂, CaI₂, MgBr₂, or the like. For example, the thermal conductivity of the heat storage material 21 is 0.1 W/(m·K).

The high heat conducting sheet 22 is formed into an annular shape as described above. At this time, the high heat conducting sheet 22 may be configured to have an annular shape by combining a plurality of sheet parts. The high heat conducting sheet 22 is a thin (for example, about 40 to 100 µm) sheet. The high heat conducting sheet 22 is formed of a material having a thermal conductivity higher than that of the heat storage material 21. It is preferred that the high heat conducting sheet 22 be formed of a material which is not corrosive by ammonia because the high heat conducting sheet 22 is exposed to ammonia. The high heat conducting sheet 22 is formed of a graphite sheet. The high heat conducting sheet 22 may be a sheet formed of stainless steel or a sheet formed of aluminum, for example.

Activated carbon is sealed in the storage 11. In the storage 11, ammonia is physically adsorbed onto the sealed activated carbon to store ammonia. For example, a mesoporous material (such as mesoporous silica, mesoporous carbon, and mesoporous alumina having mesopores), or zeolite or silica gel may be sealed in the storage 11.

If the exhaust gas purifying system 1 is configured as described above, at a low temperature of the exhausted gas from the engine 2, for example, immediately after the start of the engine 2, ammonia can be fed from the storage 11 through the connection pipe 9 to the reactor 8 in the state where the on-off valve 9a is open, and the metal salt (MaXz) in the heat storage material 21 can be chemically reacted with ammonia (NH₃) to generate heat from the heat storage material 21. Namely, the reaction (exothermic reaction) from the left side to the right side in the following reaction formula occurs:

MₐX_{z}+ nNH₃<---> Mₐ(NH₃)nX_{z} + heat

The heat generated from the heat storage material 21 is conducted through the exhaust pipe 13 to the DOC 4 to heat the DOC 4 to the active temperature suitable for purification of contaminants.

In contrast, if the temperature of the exhausted gas from the engine 2 increases and the temperature of the reactor 8 is equal to or more than a predetermined temperature, the heat of the exhausted gas (waste heat) is given to the heat storage material 21 through the exhaust pipe 13 to separate the heat storage material 21 and ammonia. Namely, the reaction (regeneration reaction) from the right side to the left side in the above reaction formula occurs. The ammonia separated from the heat storage material 21 is then recovered in the storage 11 through the connection pipe 9 due to the difference in pressure between the reactor 8 and the storage 11.

As described above, according to the first embodiment, the heat storage material 21 chemically reacts with ammonia to generate heat (reaction heat) from the heat storage material 21. The reaction heat is then conducted to the DOC 4 to heat the DOC 4.

At this time, since the high heat conducting sheet 22 having a thermal conductivity higher than that of the heat storage material 21 is interposed between the heat storage materials 21, the heat generated in the heat storage material 21 or the heat of the exhausted gas is conducted through the high heat conducting sheet 22 in the diameter direction of the exhaust pipe 13. Thereby, the thermal conductivity inside the reactor 8 in the diameter direction is improved. Accordingly, the reaction heat generated in the heat storage material 21 is readily conducted to the DOC 4 during the exothermic reaction, so that the DOC 4 can be efficiently heated. Moreover, the heat of the exhausted gas is readily conducted over the heat storage material 21 during the regeneration reaction, so that ammonia can be efficiently recovered from the reactor 8 in the storage 11, shortening the time needed for regeneration of ammonia.

Moreover, if the heat storage material 21 is a molded body formed through compression molding, the volume of the heat storage material 21 may expand due to the chemical reaction between the heat storage material 21 and ammonia. Even if the heat storage material 21 expands as above, the high heat conducting sheet 22 flexibly follows the heat storage material 21 because the high heat conducting sheet 22 is in the form of a sheet and is disposed so as to contact the outer peripheral surface of the exhaust pipe 13. Thereby, breakage of the high heat conducting sheet 22 or the like can be prevented.

### (Second Embodiment)

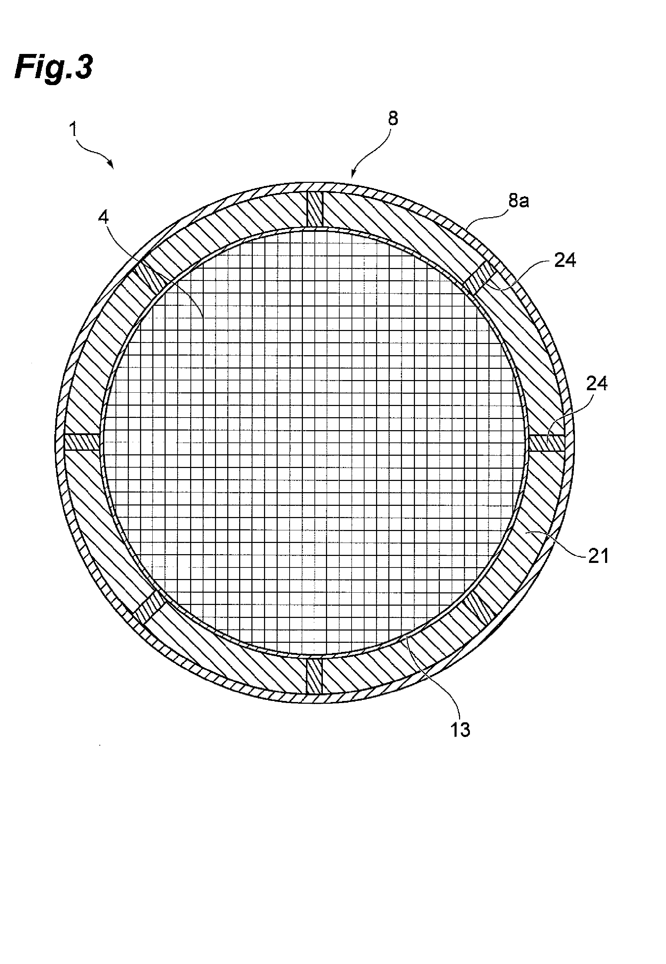

The chemical heat storage device 10 according to a second embodiment will be described with reference to Figures 3 to 5. The chemical heat storage device 10 according to the second embodiment is similar to the chemical heat storage device 10 according to the first embodiment except for the heat storage material 21 and the high heat conducting sheet 22. Hereinafter, duplication of the description of the first embodiment will be omitted, and mainly differences will be described.

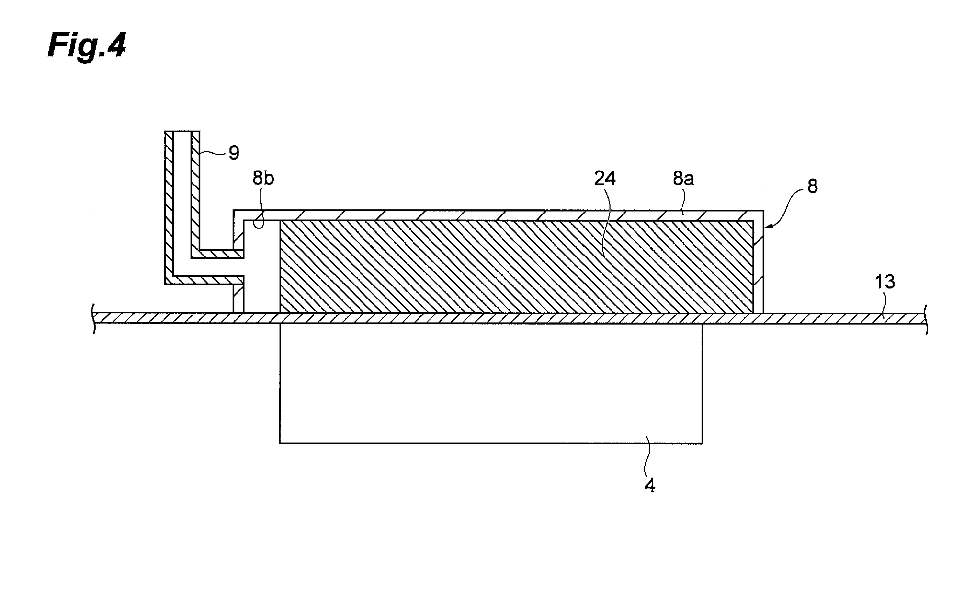

As shown in Figures 3 and 4, the reactor 8 has an annular case 8a. A plurality of heat storage materials 21 and a plurality of high heat conducting bodies 24 as a high heat conducting member are accommodated in the inner space of the case 8a. The high heat conducting bodies 24 are formed of stainless steel. The high heat conducting bodies 24 are not limited to stainless steel, and may be configured to be carbon black, carbon fibers, metal fibers, metal beads such as aluminum beads, SiC beads, Si beads, carbon beads, alumina beads, or the like.

Each heat storage material 21 is formed to have a curved cross section (in the form of a Japanese roof tile) so as to extend in the axial direction of the exhaust pipe 13, and is disposed along the circumferential direction of the exhaust pipe 13 so as to contact the outer peripheral surface of the exhaust pipe 13. The high heat conducting body 24 is interposed between the heat storage materials 21. The high heat conducting bodies 24 extend in the axial direction of the exhaust pipe 13. The high heat conducting bodies 24 are disposed approximately radially seen from the axial direction of the exhaust pipe 13.

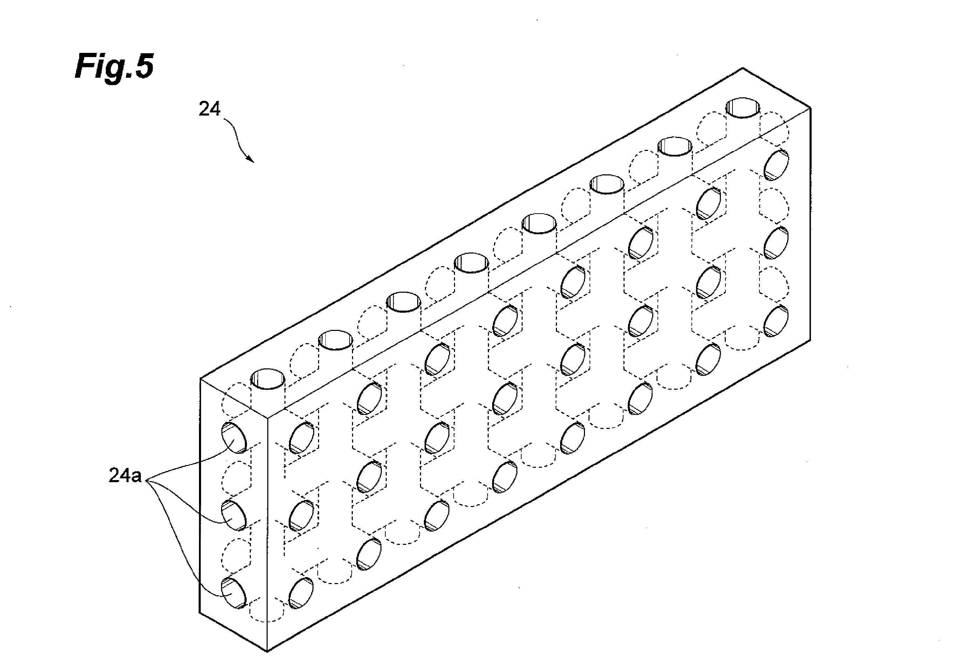

As shown in Figure 5, circular through holes 24a, which are passages for distributing ammonia, are formed in each of the high heat conducting bodies 24. These through holes 24a are formed to be aligned and are in communication with each other. The shapes of these through holes 24a may be approximately the same or different. The shapes of the through holes 24a may be polygonal, for example. By forming the through holes 24a in the high heat conducting bodies 24, ammonia is diffused to readily pass through the heat storage material 21. Each of the through holes 24a may be formed at random. Alternatively, the high heat conducting bodies 24 may be formed of a porous body such as a porous metal body, a metallic non-woven fabric, or a metallic textile, rather than a plurality of through holes 24a are formed in each of the high heat conducting bodies 24.

Moreover, as shown in Figure 4, the end of the reactor 8 upstream in the axial direction of the exhaust pipe 13 is connected to the connection pipe 9. An annular space 8b for guiding ammonia is formed inside the side of the reactor 8 to which the connection pipe 9 is connected.

As described above, according to the second embodiment, the heat generated in the heat storage material 21 or the heat of the exhausted gas is conducted through the high heat conducting bodies 24 in the axial direction of the exhaust pipe 13. Thereby, the thermal conductivity inside the reactor 8 is surely improved. Accordingly, as in the first embodiment above, the DOC 4 can be efficiently heated, and the time needed for regeneration of ammonia can be shortened.

Moreover, if the heat storage material 21 is a molded body formed through compression molding, the volume of the heat storage material 21 may expand due to the chemical reaction between the heat storage material 21 and ammonia. Even if the heat storage material 21 expands as above, the high heat conducting bodies 24 flexibly follow the expansion of the heat storage material 21 because the high heat conducting bodies 24 are disposed so as to contact the outer peripheral surface of the exhaust pipe 13. Thereby, breakage of the high heat conducting bodies 24 or the like can be prevented.

Moreover, since the reactor 8 has the annular space 8b for guiding ammonia inside the side of the reactor 8 to which the connection pipe 9 is connected, the ammonia introduced from the connection pipe 9 is immediately diffused in the circumferential direction across the inside of the reactor 8. Furthermore, since ammonia passes through the through holes 24a in the high heat conducting sheet 22, ammonia readily permeates into the whole heat storage material 21. As described above, the heat storage material 21 can be efficiently chemically reacted with ammonia inside the reactor 8.

### (Third Embodiment)

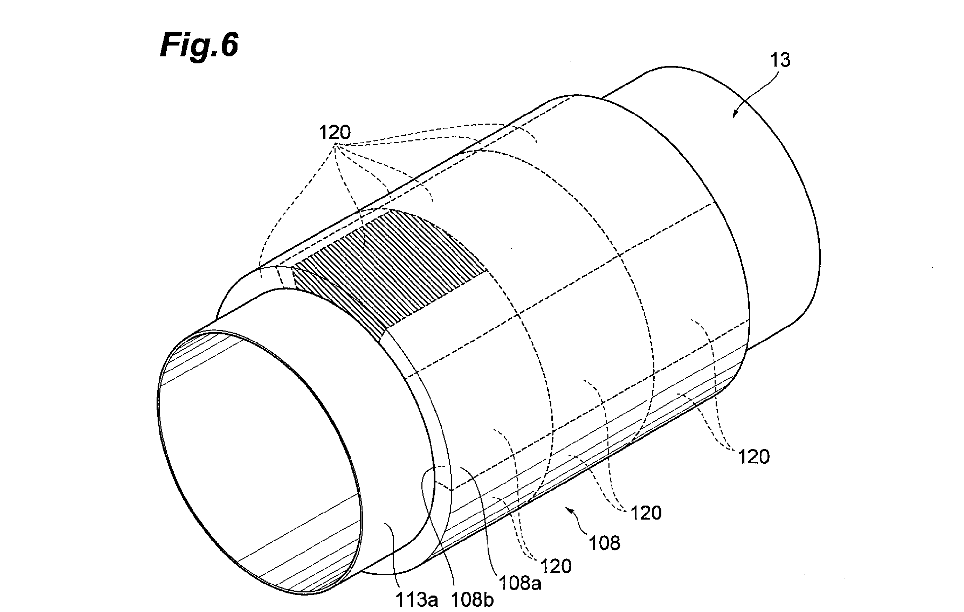

The chemical heat storage device 10 according to a third embodiment will be described with reference to Figures 6 to 8. The chemical heat storage device 10 according to the third embodiment is similar to the chemical heat storage devices 10 according to the first and second embodiments except for the reactor 8. Hereinafter, duplication of the description of the first and second embodiments will be omitted, and mainly difference will be described.

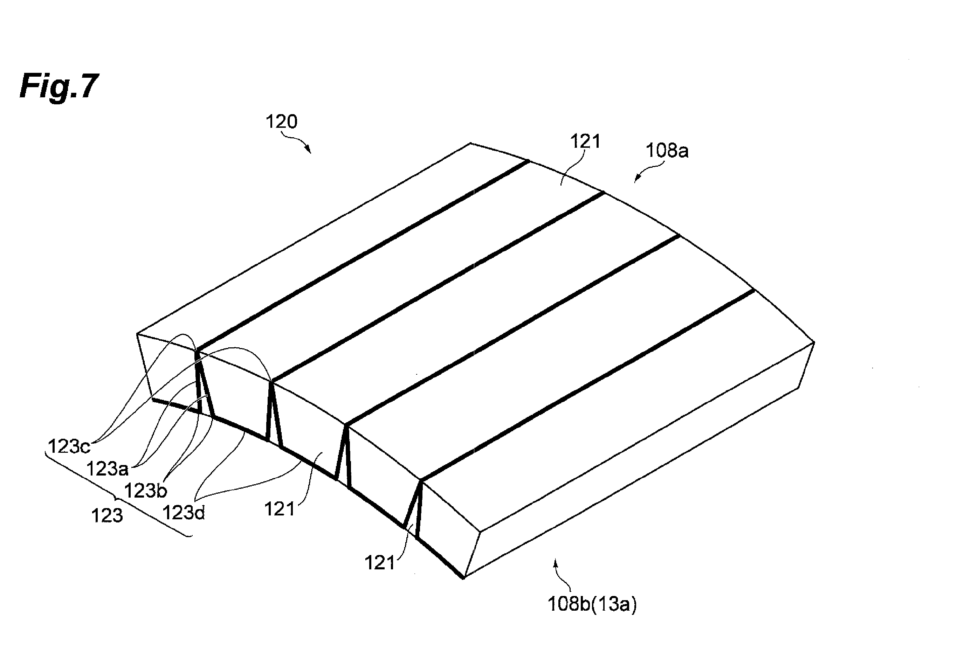

Figure 6 is a perspective view showing a molded body accommodated in the inner space of a reactor 108. As shown in Figure 6, a plurality of molded bodies 120 are accommodated in the inner space of the reactor 108. The molded body 120 is formed to have a curved cross section seen from the axial direction (exhaust air direction) of the exhaust pipe 13. These molded bodies 120 in combination are configured to have an annular shape, and in this state, are accommodated in the inner space of the reactor 108. Figure 7 is an enlarged perspective view showing part (hatched portion) of the molded bodies shown in Figure 6. As shown in Figure 7, these molded bodies 120 are molded body parts obtained by compression molding a heat storage material 121 containing a graphite sheet 123.

The graphite sheet 123 is a sheet-like high heat conducting member having a thermal conductivity higher than that of the heat storage material 121. For example, the thickness of the graphite sheet 123 is 100 µm or less, and the thermal conductivity is 300 to 1600 W/(m·K).

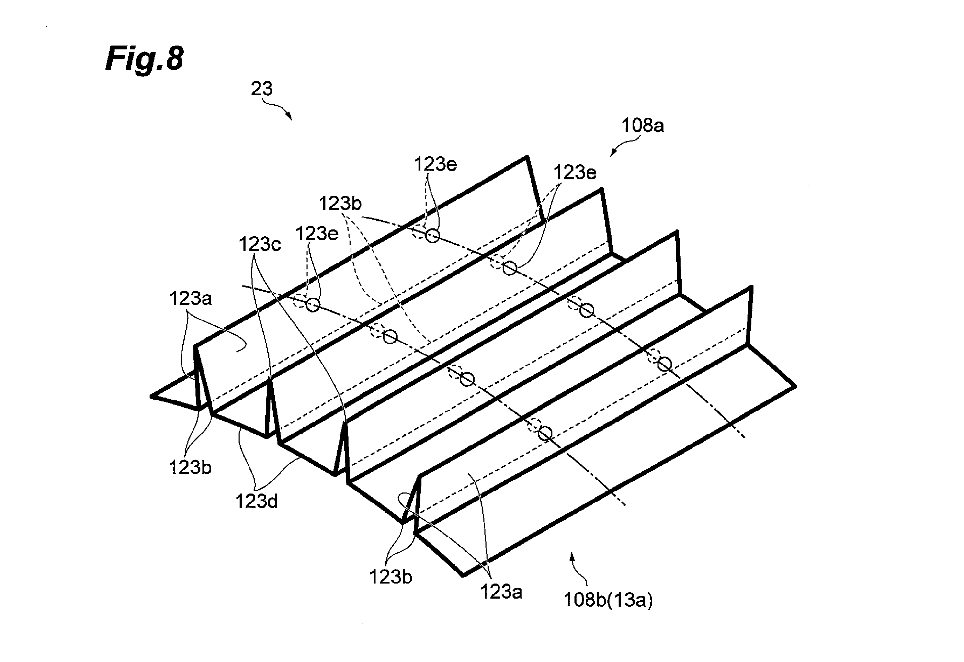

As shown in Figures 7 and 8, in the graphite sheet 123, a plurality of folded portions 123b and a plurality of folded portions 123c formed by folding the graphite sheet 123 are disposed so as to be located on the side of an outer peripheral surface 108a of the reactor 108 to which the connection pipe 9 is connected and on the side of an inner circumferential surface 108b of the reactor 108 in contact with the exhaust pipe 13, respectively, to form a plurality of heat-conducting surfaces 123a extending from the side of the outer peripheral surface 108a to the side of the inner circumferential surface 108b. In the third embodiment, the heat-conducting surfaces 123a are configured as surfaces extending in the direction substantially along the diameter direction and the axial direction of the exhaust pipe 13. Moreover, in the third embodiment, the plurality of heat-conducting surfaces 123a are configured to be formed along the circumferential direction of the exhaust pipe 13.

Moreover, as shown in Figures 7 and 8, in the graphite sheet 123, flat surfaces 123d approximately parallel to an outer peripheral surface 13a of the exhaust pipe 13 are formed. The flat surfaces 123d are disposed adjacent to the folded portions 123b located on the side of the inner circumferential surface 108b of the reactor 108.

The folded portions 123b and 123c and the flat surfaces 123d in the graphite sheet 123 are exposed from the heat storage material 121. In other words, the folded portions 123c of the graphite sheet 123 are in contact with the outer peripheral surface 108a of the reactor 108 while the folded portions 123b and the flat surfaces 123d of the graphite sheet 123 are in contact with the inner circumferential surface 108b of the reactor 108. Moreover, as shown in Figure 8, holes 123e for distributing ammonia are formed on the heat-conducting surfaces 123a of the graphite sheet 123. In the third embodiment, although the holes 123e are configured to be aligned in line along the circumferential direction of the exhaust pipe 13 as shown in Figure 8, the configuration is not limited to this.

A molded body 120 having a thermal conductivity corresponding to the target object of heating or the like can be formed by appropriately adjusting the way of folding the graphite sheet 123 or the content of the graphite sheet 123 in the heat storage material 121. Specifically, the molded body 120 having a thermal conductivity corresponding to the target object of heating or the like can be formed, for example, by adjusting the distance between adjacent folded portions 123c of the graphite sheet 123 contained in the heat storage material 121 or adjusting the volume proportion of the graphite sheet 123 contained in the heat storage material 121 to the molded body 120.

The folded graphite sheet 123 in the molded body 120 can be formed by compression molding a powdery heat storage material 121 and a preliminarily folded graphite sheet 123 set in a metal mold. Moreover, the graphite sheet 123 may be formed as follows. Namely, the graphite sheet 123 is placed in a metal mold filled with a predetermined amount of the powdery heat storage material 121. Next, for example, the graphite sheet 123 is formed into the shape shown in Figure 7 through pressing with a metal mold corresponding to the shape of the graphite sheet 123 shown in Figure 7. The powdery heat storage material 121 is then filled on the graphite sheet 123 formed into the shape shown in Figure 7, and is compression molded.

If the exhaust gas purifying system 1 as described above is configured, at a low temperature of the exhaust gas from the engine 2 (at a temperature of the exhaust gas equal to or less than the active temperature of the catalyst), for example, immediately after the start of the engine 2, the on-off valve 9a is opened, and ammonia is fed from the storage 11 through the connection pipe 9 to the reactor 108. Thereby, the heat storage material 121 (such as MgCl₂) molded as the molded body 120 chemically reacts with ammonia (NH₃), which is chemically adsorbed (coordination bonded) to generate heat from the heat storage material 121. Namely, the reaction from the left side to the right side in the following reaction formula occurs. The heat generated from the heat storage material 121 is then conducted through the exhaust pipe 13 to the DOC 4, so that the DOC 4 is heated to the active temperature suitable for purification of contaminants.

MgCl₂ + xNH₃ <---> Mg(NH₃)xCl₂ + heat

In the third embodiment, the heat storage material 121 containing the graphite sheet 123 having a thermal conductivity higher than that of the heat storage material 121 is accommodated in the reactor 108 disposed around the exhaust pipe 13. The graphite sheet 123 forms the plurality of heat-conducting surfaces 123a extending from the side of the outer peripheral surface 108a to the side of the inner circumferential surface 108b. For this reason, the heat generated in the heat storage material 121 is conducted through the graphite sheet 123 to the DOC 4, so that the thermal conductivity inside the reactor 108 is improved. As a result, the reaction heat generated in the heat storage material 121 is readily conducted to the target object of heating, i.e., the DOC 4 during the exothermic reaction so that the DOC 4 can be efficiently heated.

In contrast, if the temperature of the exhaust gas from the engine 2 increases, the heat from the exhaust gas is given to the heat storage material 121 (such as MgCl₂) molded as the molded body 120 to separate MgCl₂ and NH₃. Namely, the reaction from the right side to the left side in the above reaction formula occurs. NH₃ separated from MgCl₂ is then absorbed through the connection pipe 9 to the storage 11.

Moreover, in the third embodiment, since the heat from the exhaust gas is conducted through the graphite sheet 123 as in the exothermic reaction, the thermal conductivity inside the reactor 108 is improved. As a result, the heat from the exhaust gas is readily conducted to the heat storage material 121 during the regeneration reaction, so that ammonia can be efficiently separated from the heat storage material 121.

Moreover, in the third embodiment, the flat surfaces 123d approximately parallel to the outer peripheral surface 13a of the exhaust pipe 13 are formed adjacent to the folded portions 123b located on the side of the inner circumferential surface 108b in the graphite sheet 123. For this reason, heat can be more efficiently conducted to the portion where the flat surfaces 123d are formed, namely, the portion where the DOC 4 is disposed, and the heat from the exhaust gas can be more efficiently absorbed.

Moreover, in the third embodiment, the folded portions 123b and 123c of the graphite sheet 123 are exposed from the heat storage material 121. For this reason, heat can be more efficiently conducted to the portion where the graphite sheet 123 is exposed from the heat storage material 121, and the heat from the portion where the heat storage material 121 is exposed can be more efficiently absorbed.

Moreover, in the third embodiment, the holes 123e for distributing ammonia are formed on the heat-conducting surfaces 123a of the graphite sheet 123. For this reason, ammonia can freely pass through the graphite sheet 123 through the holes 123e formed on the heat-conducting surfaces 123a. As a result, ammonia readily permeates into the whole heat storage material 121, so that the heat storage material 121 can be efficiently chemically reacted with ammonia.

Although the first to third embodiments have been described above, the present invention is not limited to the above embodiments, and can be modified in various ways without departing from the gist of the invention.

In the above first embodiment, the number of the heat storage materials 21 and the number of the high heat conducting sheets 22 both disposed around the exhaust pipe 13 may be appropriately set. Moreover, in the above second embodiment, the number of the heat storage materials 21 and the number of the high heat conducting bodies 24 both disposed around the exhaust pipe 13 may be appropriately set.

In the above first embodiment, an annular high heat conducting body may be used instead of the high heat conducting sheet 22. Moreover, in the second embodiment, a high heat conducting sheet extending in the axial direction of the exhaust pipe 13 may be used instead of the high heat conducting bodies 24.

Furthermore, a configuration in combination of the first and second embodiments may be used. Namely, an annular high heat conducting sheet 22 may be disposed, and the high heat conducting bodies 24 may be disposed so as to extend in the axial direction of the exhaust pipe 13. Moreover, a high heat conducting member such as a high heat conducting sheet and a high heat conducting body may be disposed oblique to the reactor.

In the above second embodiment, the case where the end of the reactor 8 upstream in the axial direction of the exhaust pipe 13 is connected to the connection pipe 9 has been described, but the configuration is not limited to this; the end of the reactor 8 downstream in the axial direction of the exhaust pipe 13 may be connected to the connection pipe 9. In this case, it is desirable that the reactor 8 have an annular space for guiding ammonia inside the side of the reactor 8 to which the connection pipe 9 is connected. Moreover, the ends of the reactor 8 upstream and downstream in the axial direction of the exhaust pipe 13 may be connected to the connection pipe 9; in this case, it is desirable that two annular spaces be disposed. Moreover, an annular space may be disposed in the central portion of the reactor 8, which may be connected to the connection pipe 9.

Moreover, although the passage for distributing ammonia is formed in the high heat conducting sheet 22 in the above second embodiment, such a passage may be formed in the high heat conducting sheet 22 also in the above first embodiment.

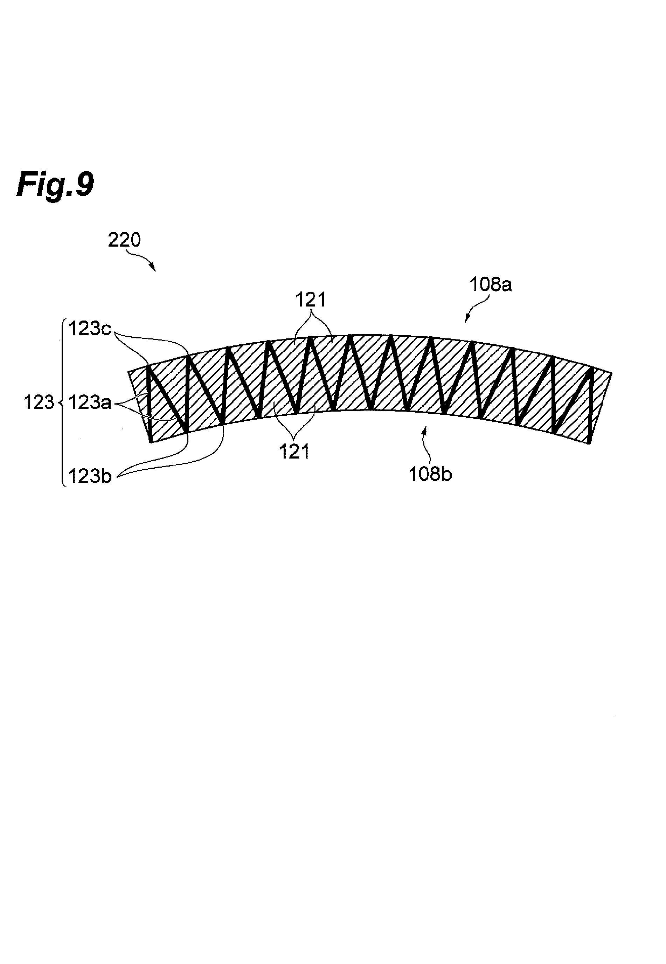

In the third embodiment, the example in which the flat surfaces 123d approximately parallel to the outer peripheral surface 13a of the exhaust pipe 13 are formed adjacent to the folded portions 123b located on the side of the inner circumferential surface 108b in the graphite sheet 123 has been described, but the present invention is not limited to this. Figure 9 is a sectional view of a molded body 220 disposed in the inner space of the reactor 108 seen from the axial direction of the exhaust pipe 13. As shown in Figure 9, the reactor may be configured such that the cross section of the graphite sheet 123 seen from the axial direction of the exhaust pipe 13 has a so-called accordion shape without disposing the flat surfaces 123d (see Figure 7 or Figure 8) on the side of the inner circumferential surface 108b or the outer peripheral surface 108a of the reactor 108.

Moreover, in the third embodiment, the example in which the folded portions 123b and the flat surfaces 123d located on the side of the inner circumferential surface 108b of the reactor 108 in the graphite sheet 123 are exposed from the heat storage material 121 has been described, but the present invention is not limited to this. The folded portions 123b and the flat surfaces 123d may be disposed on the side of the inner circumferential surface 108b of the heat storage material 121 so as not to be exposed, or only the folded portions 123b may be exposed and the flat surfaces 123d may be disposed inside the heat storage material 121. Moreover, similarly, the folded portions 123c disposed on the side of the outer peripheral surface 108a of the reactor 108 may be disposed so as not to be exposed on the side of the outer peripheral surface 108a of the heat storage material 121.

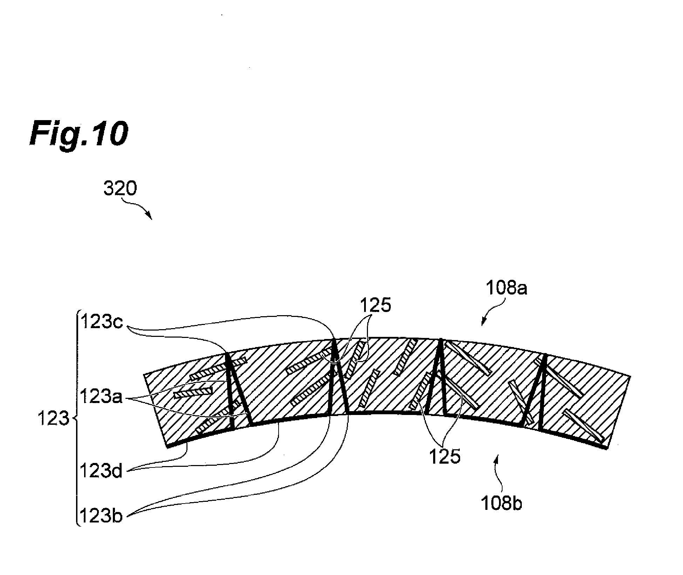

Figure 10 is a sectional view of a molded body 320 disposed in the inner space of the reactor 8 seen from the axial direction of the exhaust pipe 13. As shown in Figure 10, the heat storage material 121 may contain the graphite sheet 123 having a thermal conductivity higher than that of the heat storage material 121 and carbon fibers 125 having a thermal conductivity higher than that of the heat storage material 121. Namely, the molded body 320 prepared by compression molding the heat storage material 121, the graphite sheet 123, and the carbon fibers 125 may be disposed in the inner space of the reactor 108. In such a molded body 320, since the carbon fibers 125 having a thermal conductivity higher than that of the heat storage material 121 are contained in addition to the graphite sheet 123, heat can be more efficiently conducted. The holes 123e as shown in Figure 8 may be formed in the graphite sheet 123. In this case, the heat of the heat storage material 121 can be more efficiently conducted through embedding of the carbon fibers 125 into the holes 123e.

Moreover, in the third embodiment, the examples in which the molded bodies 120, 220, and 320 are formed into a Japanese roof tile shape (formed to have a curved cross section seen from the axial direction of the exhaust pipe 13) have been described, but the present invention is not limited to these; for example, the molded body may be formed into a rectangular parallelepiped shape, a cubic shape, or a hollow cylindrical shape.

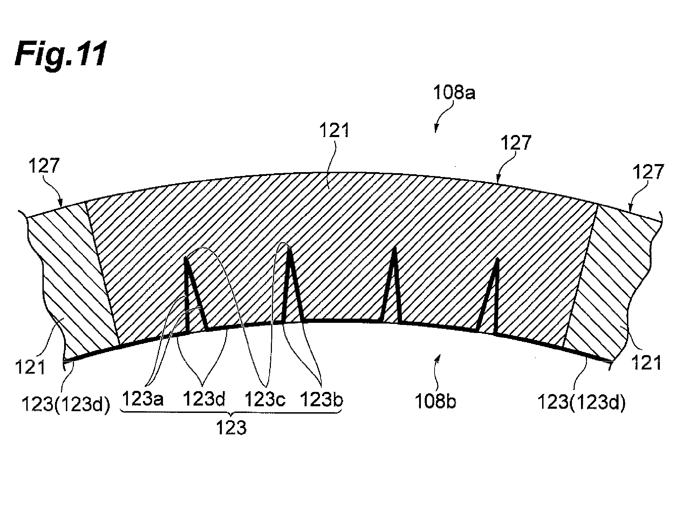

Moreover, in the third embodiment, the examples in which the molded body 120 prepared by compression molding the heat storage material 121 and the graphite sheet 123 or the molded body 320 prepared by compression molding the heat storage material 121, the graphite sheet 123, and the carbon fibers 125 are accommodated in the inner space of the reactor 108 have been described, but the present invention is not limited to this. Figure 11 is a sectional view of the inner space of the reactor 108 seen from the axial direction of the exhaust pipe 13. For example, as shown in Figure 11, the graphite sheet 123 folded into the shape shown in Figure 11 may be disposed in a predetermined space 127 formed inside the reactor 108, and then, the powdery heat storage material 121 may be filled. Even in the cases where the reactor is configured not as a molded body, the same effect as that of the third embodiment can be attained. Moreover, although the example in which the folded portions 123c disposed on the side of the outer peripheral surface 108a are not exposed from the heat storage material 121 has been described, the folded portions 123c may be configured to be exposed from the heat storage material 121. The shape of the graphite sheet 123 disposed in the heat storage material 121 may be varied as described above.

In the third embodiment, the example in which the graphite sheet 123 is used as the sheet-like high heat conducting member contained in the heat storage material 121 has been described, but the present invention is not limited to this; for example, the sheet-like high heat conducting member may be a sheet-like member formed of stainless steel, aluminum, and copper having a thermal conductivity higher than that of the heat storage material 121. It is preferred that the sheet-like high heat conducting member contained in the heat storage material 121 be a material which is not corrosive by the reaction medium.

Moreover, in the third embodiment, the example of the configuration in which the plurality of heat-conducting surfaces 123a are configured as surfaces extending in the direction substantially along the diameter direction and the axial direction of the exhaust pipe 13 and the plurality of heat-conducting surfaces 123a are formed along the circumferential direction of the exhaust pipe 13, as shown in Figures 7 and 8, has been described, but the present invention is not limited to this. For example, a configuration in which the plurality of heat-conducting surfaces 123a are configured as surfaces extending in the direction substantially along the diameter direction and the circumferential direction of the exhaust pipe 13 and the plurality of heat-conducting surfaces 123a are formed along the axial direction of the exhaust pipe 13 may be used.

In the third embodiment, the example in which a plurality of molded bodies 120 are disposed along the axial direction of the exhaust pipe 13 and the circumferential direction of the exhaust pipe 13 has been described; the number of molded bodies can be appropriately set.

Moreover, in the third embodiment, the example in which the reaction medium ammonia chemically reacts with the heat storage material 121, i.e., MgCl₂ to generate heat has been described, but the reaction medium is not limited to ammonia (NH₃) in particular, and may be H₂O, for example. In this case, CaO or the like can be used as a heat storage material which chemically reacts with H₂O.

A configuration in combination of the first and third embodiments, a configuration in combination of the second and third embodiments, or a configuration in combination of the first, second, and third embodiments may be used. For example, the high heat conducting sheet 22 and/or the high heat conducting bodies 24 may be interposed between the plurality of molded bodies 120 containing the graphite sheet 123 shown in Figure 6.

Moreover, in the above embodiments, the reaction medium ammonia chemically reacts with a heat storage material such as MgCl₂ to generate heat, but the reaction medium is not limited to ammonia (NH₃) in particular, and may be H₂O, for example. In this case, CaO or the like is used as a heat storage material which chemically reacts with H₂O.

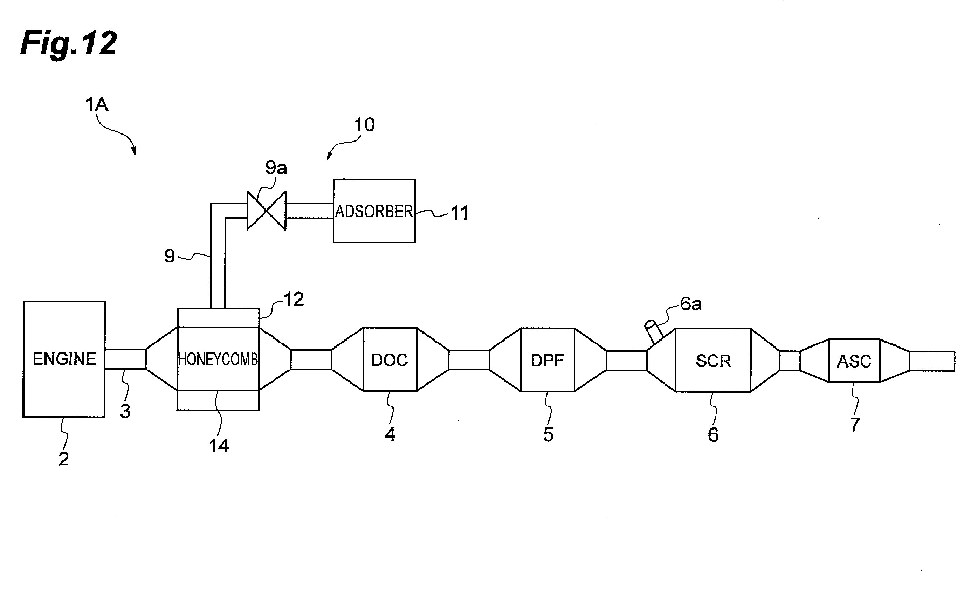

Moreover, in the above embodiments, the example in which the DOC 4 disposed in the exhaust system of the engine 2 is the target object of heating has been described, but the present invention is not limited to this; for example, the SCR 6 may be the target object of heating or the exhaust pipe 13 may be the target object of heating. Moreover, as shown in Figure 12, the present invention can be used in an exhaust gas purifying system 1A in which a heat exchanger 14 composed of a member having high thermal conductivity such as a metallic honeycomb structure is disposed inside the exhaust pipe upstream of the catalyst such as the DOC 4. In this case, the heat exchanger 14 may be the heating target, the reactor 12 may be disposed in the outer peripheral portion of the heat exchanger 14, and the heat exchanger 14 may be heated from the outer peripheral side. Moreover, in the above embodiments, the example in which the present invention is used in the exhaust system of the diesel engine 2 has been described, but the present invention is not limited to this; the present invention may be used in an exhaust system of a gasoline engine in which the catalyst or the exhaust pipe may be the target object of heating, or an engine other than internal combustion engines may be the target object of heating.

### Reference Signs List

1, 1A ... exhaust gas purifying system, 2 ... diesel engine, 4 ... DOC (target object of heating), 8, 12, 108 ... reactor, 9 ... connection pipe, 10 ... chemical heat storage device, 11 ... storage, 13 ... exhaust pipe, 13a ... outer peripheral surface, 14 ... heat exchanger (target object of heating), 21, 121 ... heat storage material, 22 ... high heat conducting sheet (high heat conducting member), 24 ... high heat conducting body (high heat conducting member), 24a ... through hole (passage), 108a ... outer peripheral surface, 108b ... inner circumferential surface, 120, 220, 320 ... molded body, 123 ... graphite sheet (high heat conducting member), 123a ... heat-conducting surface, 123b, 123c ... folded portions, 123d ... flat surface, 123e ... hole, 125 ... carbon fiber, 127 ... space.

## Claims

1. A chemical heat storage device to heat a heating target disposed inside an exhaust pipe connected to an engine, the chemical heat storage device comprising:
a reactor disposed around the exhaust pipe and including a heat storage material which chemically reacts with a reaction medium to generate heat and a high heat conducting member having a thermal conductivity higher than that of the heat storage material;
a storage which stores the reaction medium; and
a connection pipe which connects the reactor to the storage to transfer the reaction medium between the reactor and the storage,
wherein the high heat conducting member extends from a side of an outer peripheral surface of the reactor to a side of an inner circumferential surface of the reactor in contact with the exhaust pipe.

2. The chemical heat storage device according to claim 1, wherein the heat storage material and the high heat conducting member are disposed so as to contact the exhaust pipe, and
the high heat conducting member is interposed between the heat storage materials.

3. The chemical heat storage device according to claim 2, wherein each heat storage material is formed into an annular shape, and is arranged along the axial direction of the exhaust pipe, and
the high heat conducting member is formed into an annular shape.

4. The chemical heat storage device according to claim 2 or 3, wherein each heat storage materials is formed to have a curved cross section so as to extend in the axial direction of the exhaust pipe, and is arranged along the circumferential direction of the exhaust pipe, and
the high heat conducting member extends in the axial direction of the exhaust pipe.

5. The chemical heat storage device according to claim 4, wherein an annular space for guiding the reaction medium to which the connection pipe is connected is disposed in at least one end of ends of the reactor upstream and downstream in the axial direction of the exhaust pipe.

6. The chemical heat storage device according to any one of claims 1 to 5, wherein a passage for distributing the reaction medium is formed in the high heat conducting member.

7. The chemical heat storage device according to any one of claims 1 to 6, wherein the high heat conducting member has a sheet-like shape.

8. The chemical heat storage device according to claim 1, wherein the high heat conducting member is
a sheet-like member, and
each of a plurality of folded portions formed by folding the high heat conducting member is disposed so as to be located on the side of the outer peripheral surface of the reactor to which the connection pipe is connected or the side of the inner circumferential surface of the reactor in contact with the exhaust pipe, and forms a plurality of heat-conducting surfaces extending from the side of the outer peripheral surface to the side of the inner circumferential surface.

9. The chemical heat storage device according to claim 8, wherein a flat surface approximately parallel to the outer peripheral surface of the exhaust pipe is further formed in the high heat conducting member.

10. The chemical heat storage device according to claim 9, wherein the flat surface is disposed adjacent to the folded portions located on the side of the inner circumferential surface.

11. The chemical heat storage device according to any one of claims 8 to 10, wherein the folded portions of the high heat conducting member are exposed from the heat storage material.

12. The chemical heat storage device according to claim 11, wherein among the folded portions of the high heat conducting member, the folded portions located on the side of the inner circumferential surface are exposed from the heat storage material.

13. The chemical heat storage device according to any one of claims 8 to 12, wherein holes for distributing the reaction medium are formed on the heat-conducting surfaces of the high heat conducting member.

14. The chemical heat storage device according to any one of claims 8 to 13, wherein the high heat conducting member is a graphite sheet.

15. The chemical heat storage device according to any one of claims 8 to 14, wherein carbon fibers are further contained in the heat storage material.
